# FASCICULE DE BREVET EUROPEEN

(11) **EP 2 619 417 B1**
(45) Date de publication et mention de la délivrance du brevet: **14.01.2015**
(21) Numéro de dépôt: 11773064.8
(22) Date de dépôt: 12.09.2011
(51) Int. Cl.: F01D 1/26, F01D 7/00, F01D 25/16, F02C 7/06, F02C 7/28, F02K 3/072, F16J 3/04, F16J 15/06, F16J 15/52, F16J 15/56, F01D 25/18

(54) **DISPOSITIF D'ETANCHEITE**
DICHTUNGSVORRICHTUNG
SEALING DEVICE

(30) Priorité: 20.09.2010 FR 1057496
(43) Date de publication de la demande: 31.07.2013
(73) Titulaire: Snecma, 75015 Paris (FR)
(72) Inventeur: GALLET, François, F-75012 Paris (FR)
(74) Mandataire: Boura, Olivier
(86) Numéro de dépôt international: PCT/FR2011/052077
(87) Numéro de publication internationale: WO 2012/038638

(56) Documents cités:
- EP-A1- 1 911 938
- FR-A1- 2 777 336
- GB-A- 2 280 000
- US-A- 4 657 484

## Description

### Arrière-plan de l'invention

La présente invention se rapporte au domaine général de la commande de l'orientation des pales de soufflante d'un turbopropulseur.

Un domaine privilégié d'application de l'invention est celui des turbopropulseurs d'avion à double hélice.

Un turbopropulseur d'avion à double hélice comprend une turbine à deux rotors contrarotatifs entraînant chacun un ensemble de pales de soufflante non carénées. Dans ce type de moteur d'avion, l'orientation des pales de soufflante (on parle également de réglage du pas) constitue l'un des paramètres permettant de gérer la poussée du moteur.

La demande de brevet français n° 10 51458 déposée le 1er mars 2010 par la Demanderesse décrit un système de commande de l'orientation des pales de soufflante d'un tel turbopropulseur. Dans ce document, chaque pale est couplée, pour le réglage de son orientation, à un support de pied de pale monté pivotant sur un anneau rotatif au moyen d'un engrenage conique, l'un des pignons de cet engrenage étant supporté par le support de pied de pale et l'autre pignon portant un contrepoids. Un vérin centré sur l'axe de rotation de l'anneau rotatif et solidaire en rotation du rotor de turbine est relié à chaque contrepoids par l'intermédiaire d'une biellette radiale. En actionnant le vérin, les biellettes agissent sur les contrepoids selon un principe bielle/manivelle afin de commander une rotation synchronisée des supports de pied de pale.

Un tel système de commande présente de nombreux avantages. Il est en particulier fiable et léger car il possède relativement peu de pièces par rapport aux systèmes de commande de l'art antérieur.

Les biellettes de ce système s'étendent radialement depuis le vérin jusqu'aux supports de pied de pale. Aussi, certaines de ces biellettes doivent notamment traverser une enceinte à huile dans laquelle sont montés différents paliers à roulement du turbopropulseur. Ceci est notamment le cas pour les biellettes du système de commande de l'ensemble amont de pales.

Or, ces enceintes à huile sont tournantes, de sorte que l'huile qui est y présente est soumise à une force centrifuge. Par conséquent, afin d'éviter toute fuite d'huile à l'extérieur de l'enceinte à huile, il est nécessaire de rendre étanche la traversée des cloisons de l'enceinte à huile par les biellettes du système de commande.

### Objet et résumé de l'invention

La présente invention a donc pour but principal de répondre à ces attentes en proposant un dispositif permettant d'assurer une étanchéité au niveau de la cloison de l'enceinte à huile traversée par les biellettes du système de commande.

Conformément à l'invention, ce but est atteint grâce à un dispositif d'étanchéité comprenant un tube destiné à être fixé sur la cloison à étancher et un fourreau de forme tronconique destiné à être traversé par la biellette, le fourreau pouvant coulisser axialement à l'intérieur du tube et ayant, au niveau de son extrémité la plus large, des moyens d'étanchéité avec le tube et, au niveau de son extrémité la plus étroite, des moyens de fixation étanche à une extrémité correspondante de la biellette.

L'étanchéité de la traversée de cloison par la biellette est assurée par la présence des moyens d'étanchéité entre l'extrémité la plus large du fourreau et le tube. De plus, en fonctionnement, la biellette du système de commande est soumise aussi bien à des déplacements radiaux qu'à des déplacements latéraux. La forme tronconique du fourreau permet alors à celui-ci de ne pas interférer avec les mouvements latéraux de la biellette. En outre, le coulissement axial du fourreau à l'intérieur du tube permet de compenser les mouvements radiaux de la biellette.

De la sorte, le dispositif d'étanchéité selon l'invention permet de garantir efficacement une étanchéité de l'enceinte à huile d'un turbopropulseur sans avoir à utiliser de pièce souple qui pourrait éventuellement poser des problèmes de fiabilité et de durée de vie.

Le dispositif d'étanchéité selon l'invention permet également de découpler les fonctions « étanchéité » et « transmission des efforts » : cette dernière est dévolue à la biellette tandis que la première est assurée par le fourreau. Un tel découplage permet de limiter les interférences entre ces deux fonctions et rend donc leur réalisation plus aisée. En particulier, l'étanchéité au niveau de l'extrémité la plus large du fourreau ne sera pas affectée par d'éventuelles déformations de la biellette.

Enfin, ce dispositif d'étanchéité permet de limiter les phénomènes de flambement de la biellette : celle-ci ne peut éventuellement que flamber dans le sens de la longueur, mais pas dans le sens de la largeur car le fourreau limite tout flambage dans ce sens.

L'extrémité la plus large du fourreau peut comprendre sur sa périphérie un joint coopérant avec l'intérieur du tube afin d'assurer une étanchéité entre le fourreau et le tube.

Quant à l'extrémité la plus étroite du fourreau, elle peut être fermée et montée pivotante autour d'un axe de rotation de l'extrémité correspondante de la biellette afin d'assurer une fixation étanche du fourreau sur la biellette.

L'invention concerne également un système pour la commande de l'orientation des pales de soufflante d'un turbopropulseur comprenant au moins un ensemble de pales de soufflante à orientation réglable, ledit ensemble étant solidaire en rotation d'un anneau rotatif lié mécaniquement à un carter tournant, chaque pale de l'ensemble étant couplée, pour le réglage de son orientation, à un support de pied de pale monté pivotant sur l'anneau rotatif au moyen d'un engrenage conique formé d'une première roue dentée solidaire du support de pied de pale et centrée sur un axe radial à l'anneau rotatif et d'une seconde roue dentée solidaire de l'anneau rotatif, centrée sur un axe tangentiel audit anneau rotatif, et portant un contrepoids excentré par rapport à son axe de rotation, le système comprenant en outre un vérin centré sur l'axe de rotation de l'anneau rotatif, solidaire en rotation du carter tournant et dont la tige est reliée à chaque contrepoids par l'intermédiaire de biellettes radiales et de guignols de renvoi d'angle, le système comprenant en outre, pour chaque biellette radiale, un dispositif d'étanchéité tel que défini précédemment.

L'invention concerne encore un turbopropulseur à double hélice, comportant une turbine à deux carters tournant contrarotatifs et deux ensembles de pales de soufflante à orientation réglable solidaires en rotation de deux anneaux rotatifs respectivement liés aux carters tournant, la commande de l'orientation des pales de soufflante d'au moins l'un des ensembles étant réalisée par un système tel que défini ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'un turbopropulseur à double hélice muni d'un système de commande de l'orientation des hélices auquel s'applique en particulier l'invention ;
- la figure 2 est une vue agrandie de la figure 1 montrant l'emplacement du dispositif d'étanchéité selon l'invention ;
- les figures 3A et 3B montrent de façon schématique la cinématique du système de commande des figures 1 et 2 ;
- les figures 4A à 4C montrent le dispositif d'étanchéité de la figure 2 dans différentes positions ; et
- la figure 5 montre de façon plus précise la fixation étanche du fourreau du dispositif d'étanchéité selon l'invention sur l'extrémité de la biellette.

### Description détaillée d'un mode de réalisation

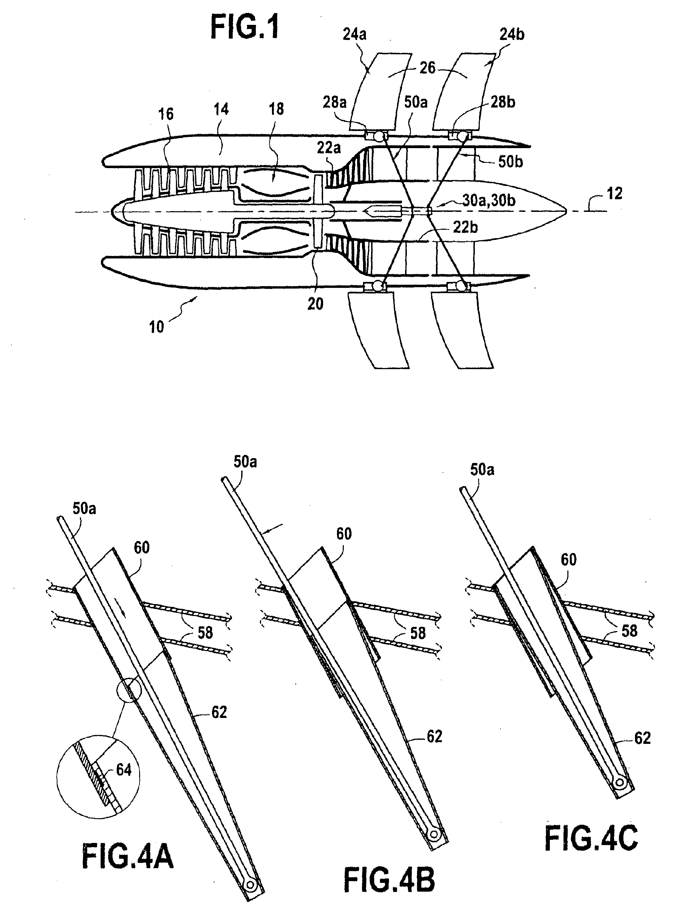

La figure 1 représente de façon très schématique un exemple de réalisation d'un turbopropulseur 10 d'avion du type à double hélice.

Le turbopropulseur 10 comprend notamment un axe longitudinal 12 et une nacelle annulaire 14 disposée coaxialement autour de l'axe longitudinal. D'amont en aval, il comprend en outre un compresseur 16, une chambre de combustion 18 et une turbine 20 dite de puissance entraînant en rotation (de façon directe ou indirecte) deux carters tournant 22a, 22b.

Le turbopropulseur 10 comprend encore un ensemble amont (ou avant) 24a et un ensemble aval (ou arrière) 24b de pales de soufflante 26 à orientation réglable. Les pales de soufflante 26 de chaque ensemble 24a, 24b sont plus précisément montées sur un anneau rotatif 28a, 28b en forme de plate-forme annulaire centrée sur l'axe longitudinal 12 du turbopropulseur.

Chaque carter tournant 22a, 22b porte et entraîne en rotation l'un des anneaux rotatifs 28a, 28b sur lequel est monté l'un des ensembles 24a, 24b de pales de soufflante à orientation réglable.

Le turbopropulseur 10 comprend encore un système pour la commande de l'orientation des pales de soufflante des ensembles amont 24a et aval 24b. Ce système de commande est décrit dans la demande de brevet français n° 10 51458 déposée le 1er mars 2010 par la Demanderesse et dont le contenu est incorporé ici par référence.

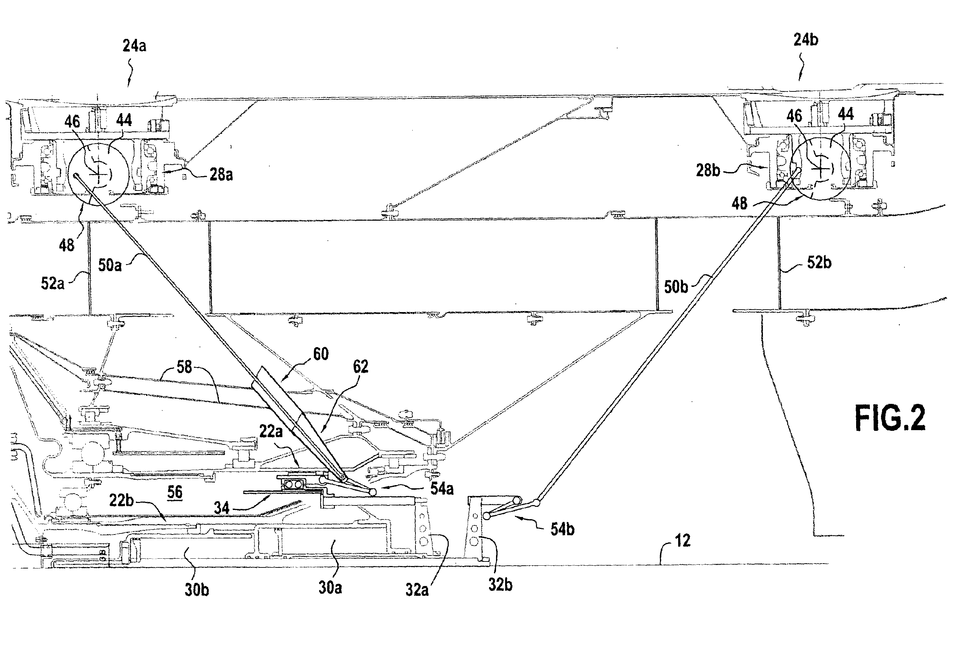

Comme représenté sur la figure 2, le système de commande comprend deux vérins 30a, 30b cylindriques actionnant des mécanismes de changement de l'orientation des pales de soufflante des ensembles amont et aval, ces mécanismes étant formés notamment à partir de biellettes décrites ultérieurement.

Les vérins 30a, 30b sont coaxiaux, centrés sur l'axe longitudinal 12 et solidaires en rotation d'un arbre du carter tournant 22b entraînant en rotation l'ensemble aval 24b.

Les tiges 32a, 32b respectives de ces deux vérins translatent axialement le long de l'axe longitudinal 12, la tige 32a du vérin extérieur 30a permettant d'ajuster l'orientation des pales de soufflante de l'ensemble amont 24a et la tige 32b du vérin intérieur 30b permettant d'ajuster l'orientation des pales de soufflante de l'ensemble aval 24b.

Un palier à roulement 34 est monté entre la tige 32a du vérin intérieur 30b et le mécanisme de changement de l'orientation des pales de soufflante de l'ensemble amont afin de transmettre les efforts axiaux du vérin intérieur vers le mécanisme tout en laissant ces deux entités libres de tourner dans des sens opposés.

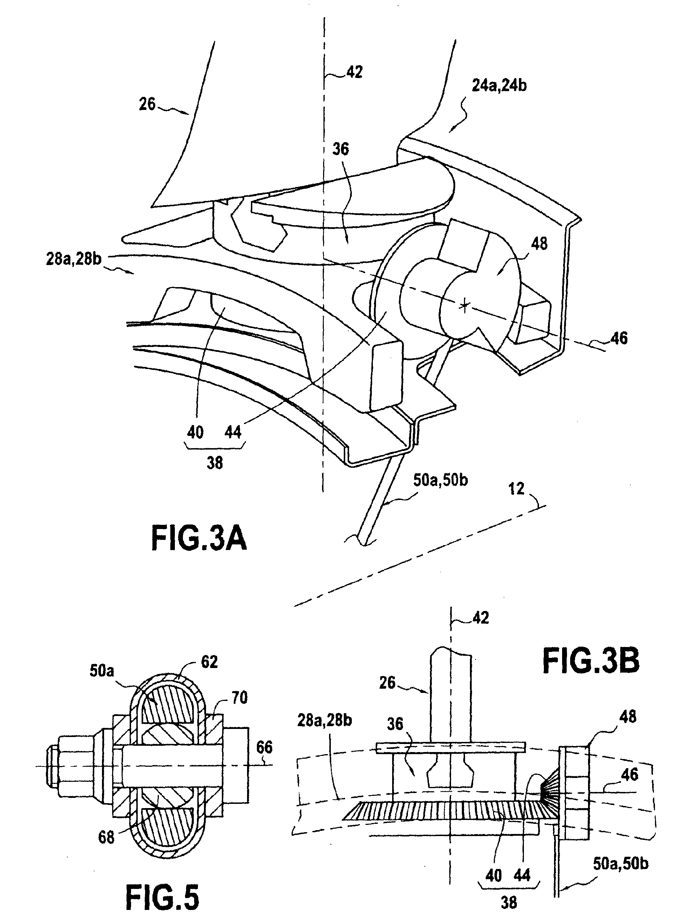

Par ailleurs, comme représenté sur les figures 3A et 3B, chaque pale 26 des ensembles 24a, 24b est couplée à un support de pied de pale 36 monté pivotant sur l'anneau rotatif 28a, 28b au moyen d'un engrenage conique 38. Cet engrenage conique est formé d'une première roue dentée 40, solidaire du support de pied de pale et centrée sur un axe radial 42 à l'anneau rotatif, et d'une seconde roue dentée 44 solidaire de l'anneau rotatif et centrée sur un axe tangentiel 46 à cet anneau rotatif.

Le nombre de dents de la première roue dentée 40 est choisi de façon à être sensiblement deux fois supérieur au nombre de dents de la seconde roue dentée 44. Ainsi, une rotation de 90° de la seconde roue dentée entraînera une rotation de 45° environ de la première roue dentée.

Quant à la seconde roue dentée 44 de chaque engrenage conique, elle porte une masselotte formant contrepoids 48, celui-ci étant excentré par rapport à l'axe de rotation 46 de la roue. La masse de ce contrepoids est prédéfinie en fonction notamment des caractéristiques des pales de soufflante.

Chaque mécanisme de changement de l'orientation des pales de soufflante comprend en outre une pluralité de bras de liaison qui relient la tige 32a, 32b du vérin 30a, 30b correspondant aux contrepoids 48 de l'ensemble correspondant de pales de soufflante.

Ces bras de liaison ont pour fonction de convertir le déplacement axial de la tige du vérin en une rotation synchronisée des contrepoids de l'ensemble correspondant de pales de soufflante autour de leur axe de rotation 46 respectif.

A cet effet, chaque bras de liaison comprend notamment une biellette radiale 50a, 50b traversant un bras de carter 52a, 52b du turbopropulseur et ayant une extrémité reliée au contrepoids correspondant et l'autre extrémité reliée à une branche d'un guignol de renvoi d'angle 54a, 54b dont l'autre branche est reliée à la tige 32a, 32b du vérin correspondant.

Chaque bras de liaison comprend également une biellette de guidage (non représentées sur les figures) dont une extrémité est reliée à la liaison entre les deux branches du guignol de renvoi d'angle et dont l'autre extrémité sert de support de guidage pour la biellette radiale.

Au niveau des vérins 30a, 30b, le turbopropulseur 10 comprend aussi une enceinte à huile 56 à l'intérieur de laquelle sont disposés les différents paliers à roulement supportant en rotation les arbres de rotor (et en particulier le palier à roulement 34).

Cette enceinte à huile (qui est soumise aux effets de la force centrifuge due à la rotation des rotors) est centrée sur l'axe longitudinal 12 du turbopropulseur et est délimité radialement à l'extérieur par une cloison annulaire 58 solidaire du rotor d'entraînement de l'ensemble amont 24a.

Cette cloison 58 qui est formée d'une double paroi est donc traversée de part en part par les biellettes radiales 50a du mécanisme de changement de l'orientation des pales de soufflante de l'ensemble amont.

Afin d'éviter toute fuite d'huile hors de l'enceinte à huile 56, il est nécessaire d'assurer une étanchéité au niveau de cette traversée de cloison 58 par les biellettes radiales 50a.

A cet effet, selon l'invention, il est prévu pour chaque biellette radiale un dispositif d'étanchéité comprenant notamment un tube creux 60, de forme oblong ou annulaire, traversant de part en part la cloison 58 à étancher et fixé sur celui-ci (par exemple par soudure ou par vissage dans le cas d'un tube métallique).

Le dispositif d'étanchéité comprend également un fourreau 62 de forme tronconique pouvant coulisser axialement à l'intérieur du tube 60, ce fourreau étant monté autour de la biellette radiale 50a. Plus précisément, l'extrémité la plus étroite du fourreau est fixée de façon étanche à l'extrémité de la biellette radiale qui est reliée au guignol de renvoi d'angle (cette extrémité est également appelée pied de la biellette radiale).

A partir de cette extrémité la plus étroite, la forme du fourreau s'évase jusqu'à son extrémité la plus large qui est pourvue de moyens d'étanchéité avec le tube. Par exemple, l'extrémité la plus large du fourreau comprend sur sa périphérie un joint oblong ou annulaire 64 coopérant avec l'intérieur du tube afin d'assurer une étanchéité entre le fourreau et le tube (voir la figure 4A).

De la sorte, le dispositif d'étanchéité selon l'invention permet de garantir efficacement une étanchéité de l'enceinte à huile 56 délimitée radialement à l'extérieur par la cloison 58.

En fonctionnement, la biellette radiale 50a du système de commande est soumise aussi bien à des déplacements radiaux (c'est-à-dire parallèlement à son axe de révolution) qu'à des déplacements latéraux. Comme représenté sur la figure 4B, la forme tronconique du fourreau 62 permet à celui-ci de ne pas interférer avec les mouvements latéraux de la biellette. Quant aux mouvements radiaux de la biellette, ils sont absorbés par le coulissement du fourreau à l'intérieur du tube 60 fixé sur la cloison 58 à étancher (voir les figures 4A et 4C).

On notera que l'extrémité la plus étroite du fourreau 62 est fermée et montée pivotante autour d'un axe de rotation 66 du pied de la biellette radiale 50a. Plus précisément, comme représenté sur la figure 5, le pied de la biellette radiale est monté sur une rotule 68 que traverse l'axe d'une chape 70. Cette rotule, ainsi que le pied de la biellette radiale, sont logés dans le fourreau 62 qui est fermé à cette extrémité. Ainsi, l'huile contenue dans l'enceinte à huile ne peut s'échapper par cette extrémité la plus étroite du fourreau.

## Revendications

1. Dispositif d'étanchéité pour la traversée de cloison par une biellette d'un système de commande de l'orientation des pales de soufflante d'un turbopropulseur, **caractérisé en ce qu'**il comprend un tube (60) destiné à être fixé sur la cloison (58) à étancher, et un fourreau (62) de forme tronconique destiné à être traversé par la biellette (50a), le fourreau pouvant coulisser axialement à l'intérieur du tube et ayant, au niveau de son extrémité la plus large, des moyens d'étanchéité (64) avec le tube et, au niveau de son extrémité la plus étroite, des moyens de fixation étanche à une extrémité correspondante de la biellette.

2. Dispositif selon la revendication 1, dans lequel l'extrémité la plus large du fourreau comprend sur sa périphérie un joint (64) coopérant avec l'intérieur du tube afin d'assurer une étanchéité entre le fourreau et le tube.

3. Dispositif selon l'une des revendications 1 et 2, dans lequel l'extrémité la plus étroite du fourreau est fermée et montée pivotante autour d'un axe de rotation (66) de l'extrémité correspondante de la biellette afin d'assurer une fixation étanche du fourreau sur la biellette.

4. Système pour la commande de l'orientation des pales de soufflante d'un turbopropulseur comprenant au moins un ensemble (24a, 24b) de pales (26) de soufflante à orientation réglable, ledit ensemble étant solidaire en rotation d'un anneau rotatif (28a, 28b) lié mécaniquement à un carter tournant (22a, 22b), chaque pale de l'ensemble étant couplée, pour le réglage de son orientation, à un support de pied de pale (36) monté pivotant sur l'anneau rotatif au moyen d'un engrenage conique (38) formé d'une première roue dentée (40) solidaire du support de pied de pale et centrée sur un axe radial (42) à l'anneau rotatif et d'une seconde roue dentée (44) solidaire de l'anneau rotatif, centrée sur un axe tangentiel (46) audit anneau rotatif, et portant un contrepoids (48) excentré par rapport à son axe de rotation, le système comprenant en outre un vérin (30a, 30b) centré sur l'axe de rotation (12) de l'anneau rotatif, solidaire en rotation du carter tournant et dont la tige (32a, 32b) est reliée à chaque contrepoids par l'intermédiaire de biellettes radiales (50a, 50b) et de guignols de renvoi d'angle (54a, 54b), **caractérisé en ce qu'**il comprend en outre, pour chaque biellette radiale, un dispositif d'étanchéité selon l'une quelconque des revendications 1 à 3.

5. Turbopropulseur à double hélice, comportant une turbine (20) à deux carters tournant (22a, 22b) contrarotatifs et deux ensembles (24a, 24b) de pales (26) de soufflante à orientation réglable solidaires en rotation de deux anneaux rotatifs (28a, 28b) respectivement liés aux carters tournant, la commande de l'orientation des pales de soufflante d'au moins l'un des ensembles étant réalisée par un système selon la revendication 4.

## Patentansprüche

1. Dichtungsvorrichtung für den Durchgriff einer Trennwand durch einen Schwingarm eines Systems zur Steuerung der Ausrichtung der Gebläseschaufeln eines Turboprop-Triebwerks, **dadurch gekennzeichnet, dass** sie ein Rohr (60), welches dazu bestimmt ist, an der abzudichtenden Trennwand (58) befestigt zu werden, sowie eine kegelstumpfförmige Hülse (62), welche dazu bestimmt ist, von dem Schwingarm (50a) durchgriffen zu werden, umfasst, wobei die Hülse innerhalb des Rohrs axial verschieblich ist und im Bereich ihres weitesten Endes Mittel zur Abdichtung (64) mit dem Rohr sowie im Bereich ihres engsten Endes Mittel zur dichten Befestigung an einem entsprechenden Ende des Schwingarms aufweist.

2. Vorrichtung nach Anspruch 1, wobei das weiteste Ende der Hülse an seinem Umfang eine Dichtung (64) umfasst, die mit der Innenseite des Rohrs zusammenwirkt, um eine Dichtigkeit zwischen der Hülse und dem Rohr sicherzustellen.

3. Vorrichtung nach einem der Ansprüche 1 und 2, wobei das engste Ende der Hülse geschlossen ist und um eine Rotationsachse (66) des entsprechenden Endes des Schwingarms drehbar angebracht ist, um eine dichte Befestigung der Hülse an dem Schwingarm sicherzustellen.

4. System für die Steuerung der Ausrichtung der Gebläseschaufeln eines Turboprop-Triebwerks, umfassend wenigstens eine Anordnung (24a, 24b) von Gebläseschaufeln (26) mit einstellbarer Ausrichtung, wobei die Anordnung mit einem Drehring (28a, 28b), der mit einem umlaufenden Gehäuse (22a, 22b) mechanisch verbunden ist, drehfest verbunden ist, wobei jede Schaufel der Anordnung für die Einstellung ihrer Ausrichtung mit einem Schaufelfußhalter (36) gekoppelt ist, der mittels eines Kegelradgetriebes (38), das von einem ersten Zahnrad (40), welches mit dem Schaufelfußhalter fest verbunden und um eine zu dem Drehring radiale Achse (42) zentriert ist, sowie von einem zweiten Zahnrad (44), welches mit dem Drehring fest verbunden, um eine zu dem Drehring tangentiale Achse (46) zentriert ist und ein gegenüber seiner Rotationsachse außermittig angebrachtes Gegengewicht (48) trägt, gebildet ist, an dem Drehring drehbar angebracht ist, wobei das System ferner einen Zylinder (30a, 30b) umfasst, der um die Rotationsachse (12) des Drehrings zentriert, mit dem umlaufenden Gehäuse drehfest verbunden ist und dessen Stange (32a, 32b) mit jedem Gegenwicht mittels radialer Schwingarme (50a, 50b) und Umlenkhebeln (54a, 54b) verbunden ist, **dadurch gekennzeichnet, dass** es ferner für jeden radialen Schwingarm eine Dichtungsvorrichtung nach einem der Ansprüche 1 bis 3 umfasst.

5. Turboprop-Triebwerk mit Doppelpropeller, umfassend eine Turbine (20) mit zwei gegenläufig umlaufenden Gehäusen (22a, 22b) und zwei Anordnungen (24a, 24b) von Gebläseschaufeln (26) mit einstellbarer Ausrichtung, die mit zwei Drehringen (28a, 28b), welche jeweils mit den umlaufenden Gehäusen verbunden sind, drehfest verbunden sind, wobei die Steuerung der Ausrichtung der Gebläseschaufeln von wenigstens einer der Anordnungen durch ein System nach Anspruch 4 vollzogen wird.

## Claims

1. A sealing device for passing a connecting rod of a system for controlling the pitch of fan blades of a turboprop through a partition, **characterised in that** it comprises a tube (60) for fastening to the partition (58) that is to be sealed, and a frustoconical sheath (62) through which the connecting rod (50a) is to pass, the sheath being capable of sliding axially inside the tube and having, at its wider end, sealing means (64) cooperating with the tube, and, at its narrower end, leaktight fastener means for fastening to a corresponding end of the connecting rod.

2. A device according to claim 1, wherein the wider end of the sheath has a gasket (64) at its periphery cooperating with the inside of the tube in order to provide sealing between the sheath and the tube.

3. A device according to claim 1 or claim 2, wherein the narrower end of the sheath is closed and pivotally mounted about a pivot pin (66) of the corresponding end of the connecting rod in order to fasten the sheath to the connecting rod in sealed manner.

4. A system for controlling the pitch of fan blades of a turboprop having at least one set (24a, 24b) of adjustable-pitch fan blades (26), said set being constrained to rotate with a rotary ring (28a, 28b) mechanically connected to a rotary casing (22a, 22b), each blade of the set being coupled for adjusting its pitch to a blade root support (36) pivotally mounted on the rotary ring by means of bevel gearing (38) comprising a first toothed wheel (40) secured to the blade root support and centered on an axis (42) that is radial relative to the rotary ring, and a second toothed wheel (44) secured to the rotary ring and centered on an axis (46) that is tangential relative to said rotary ring, the second toothed wheel carrying a counterweight (48) that is eccentric relative to its axis of rotation, the system further including an actuator (30a, 30b) centered on the axis of rotation of the rotary ring, constrained to rotate with the rotary casing, and having its rod (32a, 32b) connected to each counterweight by radial connecting rods (50a, 50b) and bellcranks (54a, 54b), **characterised in that** it further comprises for each radial connecting rod a sealing device according to any one of claims 1 to 3.

5. A turboprop having two propellers, including a turbine (20) having two contrarotating rotary casings (22a, 22b) and two sets (24a, 24b) of adjustable-pitch fan blades (26) constrained to rotate with two rotary rings (28a, 28b) respectively connected to the rotary casings, the pitch of the fan blades of at least one of the sets being controlled by a system according to claim 4.
